# EUROPÄISCHE PATENTSCHRIFT

(11) **EP 0 362 717 B1**
(45) Veröffentlichungstag und Bekanntmachung des Hinweises auf die Patenterteilung: **11.08.1993**
(21) Anmeldenummer: 89118119.0
(22) Anmeldetag: 29.09.1989
(51) Int. Cl.: A01G 13/00

(54) **Als Pflanzhilfe dienende Abdeckscheibe**
Covering disc serving as a plant aid
Disque de recouvrement servant d'aide de plantes

(30) Priorität: 01.10.1988 DE 8812430 U
(43) Veröffentlichungstag der Anmeldung: 11.04.1990
(73) Patentinhaber: Propfe, Herbert, Dr., 68163 Mannheim (DE); Stotz, Lorenz-Peter, D-24983 Handewitt (DE); Stotz, Klaus-Dieter, D-24983 Handewitt (DE)
(72) Erfinder: Propfe, Herbert, Dr., 68163 Mannheim (DE); Stotz, Lorenz-Peter, D-24983 Handewitt (DE); Stotz, Klaus-Dieter, D-24983 Handewitt (DE)
(74) Vertreter: Tönnies, Jan G., Dipl.-Ing.

(56) Entgegenhaltungen:
- EP-A- 0 142 658
- DE-A- 2 658 352
- DE-A- 3 121 590
- DE-U- 8 714 858
- GB-A- 1 284 768
- GB-A- 1 598 076

## Beschreibung

Die Erfindung betrifft eine als Pflanzhilfe dienende Abdeckscheibe aus einem verrottbaren Material mit den Merkmalen des ersten Teils des Anspruchs 1.

Derartige aus der GB-A-15 98 076 bekannten Abdeckscheiben, werden zur Unterdrückung des Unkrautwachstums in der unmittelbaren Umgebung von Jungpflanzen um deren Stamm gelegt.

Bei derartigen Abdeckscheiben ist zu berücksichtigen, daß einige durch diese zu schützende Jungpflanzen an einem besonderen, eine mechanische Stütze bietenden Pfahl angebunden sind. Die Abdeckscheibe ist daher so auszubilden, daß sie auch bei Vorhandensein eines derartigen Stützpfahls verwendbar ist, wobei das Anbringen der Abdeckscheibe auch bei Vorhandensein eines derartigen Pfahles schnell und zuverlässig möglich sein muß.

Erfindungsgemäß wird diese Aufgabe gelöst durch die im zweiten Teil des Anspruchs 1 angegebenen Merkmale. Die Unteransprüche geben bevorzugte Ausgestaltungen der Erfindung an.

Die Erfindung wird im folgenden anhand einer Zeichnung erläutert. Dabei zeigt:
Fig. 1 eine Draufsicht auf eine der beiden die Abdeckscheibe bildenden Teile,
Fig. 2 eine Seitenansicht auf das in Figur 1 gezeigte Teil,
Fig. 3 eine Darstellung, bei der die beiden Teile (hier eckig ausgebildet) bei Vorhandensein eines Stützpfahles zusammengesteckt sind, und
Fig. 4 eine Figur 3 entsprechende Darstellung, bei der die beiden Teile bei Fehlen eines Stützpfahles zusammengesteckt sind.

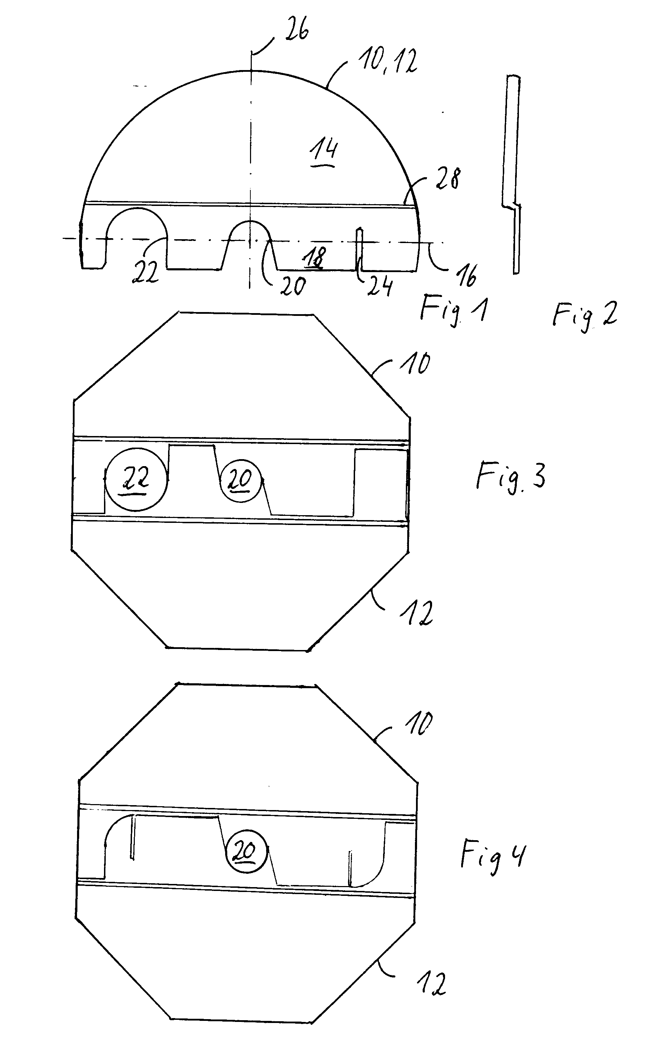

Das in Figur 1 dargestellte Teil 10 (das Teil 12 ist identisch ausgebildet) besteht aus einer Fläche 14 in Form eines Halbkreises und einer in sich an die gedachte Durchmesserlinie 16 der Hauptfläche anschließenden Überlappungsfläche 18. Die Überlappungsfläche 18 ist mit einer sich mittig quer zu der Durchmesserlinie 16 erstreckenden Ausnehmung 20 versehen, die halbkreisförmig über die Durchmesserlinie 16 hinweg in die Hauptfläche 14 ragt. Eine zweite Ausnehmung 22 erstreckt sich außermittig quer zu der Durchmesserlinie 16 durch die Überlappungsfläche 18 und ragt halbkreisförmig in die Hauptfläche 14. Der Durchmesser des halbkreisförmigen Abschnitts der zweiten Ausnehmung 22 bzw. die diesem entsprechende Breite der Ausnehmung 22 ist erheblich größer als der Durchmesser des halbkreisförmigen Abschnitts der mittig angeordneten ersten Ausnehmung 20. Die Breite der mittig angeordneten ersten Ausnehmung 20 ist dabei nach außen sich konisch erweiternd ausgebildet.

Die Überlappungsfläche 18 ist weiter mit einem sich etwas über die gedachte Durchmesserlinie 16 hinaus erstreckenden Schlitz 24 versehen, wobei der Abstand des Schlitzes 24 von der gedachten Mittellinie 26 dem mittleren Abstand der zweiten Ausnehmung 22 von der gedachten Mittellinie 26 entspricht.

Figur 2 verdeutlicht, daß die Hauptfläche 14 quer zu ihrer Durchmesserlinie 16 gekröpft ausgebildet ist. Der Abstand zwischen der Durchmesserlinie 16 und der durch die Kröpfung gebildeten, parallel zu der Durchmesserlinie 16 verlaufenden Kröpflinie 28 entspricht dabei der Breite der Überlappungsfläche 18. Die Stärke der Teile 10, 12 ist dabei im Bereich der Überlappungsfläche 18 und im Bereich zwischen der Kröpfungslinie 28 und der Durchmesserlinie 16 etwa auf die Hälfte der Stärke der Teile 10, 12 jenseits der Kröpfungslinie 28 reduziert.

Die Figuren 3 und 4 machen - am Beispiel eckig ausgebildeter Teile 10, 12 - deutlich, daß diese wahlweise so zusammengesteckt werden können, daß die zweiten, außermittigen Ausnehmungen 22 eine Öffnung für einen Stützpfahl belassen (Figur 3), oder aber (Figur 4) derart, daß diese Öffnungen verdeckt werden. Es wird deutlich, daß die aus zwei identisch ausgebildeten Teilen 10, 12 zusammengesteckte Abdeckscheibe somit wahlweise bei Vorhandensein oder aber Fehlen eines Pflanzpfahls eingesetzt werden können.

Die Teile 10, 12 können aus organischen Faserstoffen, beispielsweise Stroh oder Holzfaserstoffen, die mittels Leimen verklebt worden sind, gebildet werden. Es können jedoch auch verrottbare Kunststoffe bzw. Kunststoffschaum auf der Basis von Formaldehydharnstoff oder Polystyrol eingesetzt werden.

Um eine bessere Wetterfestigkeit zu erreichen, können die Oberflächen lackiert sein. Der Durchtritt von Feuchtigkeit durch die Fläche der Abdeckscheibe wird verbessert, wenn diese mit feinen Löchern versehen ist.

Zur Abwehr von Insekten kann das Material der die Abdeckscheibe bildenden Teile 10, 12 mit insektizid- oder muluskizidwirksamen Stoffen durchtränkt sein. Ein Kriechen von Schadorganismen über die Scheibe wird verhindert, wenn diese mit einem klebenden Stoff beschichtet ist.

Die vorgeschlagene Durchtränkung bzw. Beschichtung der Scheibe ist auch unabhängig von der vorgeschlagenen geometrischen Ausbildung sinnvoll.

## Patentansprüche

1. Als Pflanzhilfe dienende Abdeckscheibe aus einem verrottbaren Material, mit zwei identischen, zur Bildung der Abdeckscheibe einander teilweise überlappend übereinanderzulegende Teile (10, 12), jeweils bestehend aus einer Hauptfläche (14) in Form eines Halbkreises oder eines halben Vielecks und einer sich an die gedachte Durchmesserlinie bzw. Grundlinie (16) der Hauptfläche (14) anschließenden Überlappungsfläche (18), die mit einer sich mittig quer zu der Durchmesserlinie bzw. Grundlinie (16) erstreckenden, in die Hauptfläche (14) ragenden ersten Ausnehmung (20) versehen ist,
dadurch gekennzeichnet,
die beiden Teile (10, 12) mit einer sich außermittig quer zu der Durchmesserlinie bzw. Grundlinie (16) erstreckenden, halbkreisförmig in die Hauptfläche (14) ragenden zweiten Ausnehmung (22) versehen sind.

2. Abdeckscheibe nach Anspruch 1, dadurch gekennzeichnet, dar die Überlappungsfläche (18) mit einem sich quer zu der Durchmesserlinie bzw. Grundlinie (16) der Hauptfläche (14) erstreckenden Schlitz (24) versehen ist.

3. Abdeckscheibe nach Anspruch 1 oder 2, dadurch gekennzeichnet, daß der Radius des halbkreisförmigen Abschnitts der außermittig angeordneten zweiten Ausnehmung (22) mehr als das Doppelte des Radius des halbkreisförmigen Abschnitts der mittig angeordneten ersten Ausnehmung (20) beträgt.

4. Abdeckscheibe nach Anspruch 2 oder 3, dadurch gekennzeichnet, daß der Abstand des Schlitzes (24) von der gedachten Mittellinie (26) der Teile (10, 12) dem mittleren Abstand der zweiten Ausnehmung (22) von dieser Mittellinie entspricht.

5. Abdeckscheibe nach einem der vorangehenden Ansprüche, dadurch gekennzeichnet, daß die erste Ausnehmung (20) sich nach außen konisch erweiternd ausgebildet ist.

6. Abdeckscheibe nach einem der vorangehenden Ansprüche, dadurch gekennzeichnet, daß die Hauptfläche (14) quer zu ihrer Durchmesserlinie bzw. Grundlinie (16) gekröpft ausgebildet ist, wobei der Abstand der Kröpflinie (28) von der Durchmesserlinie bzw. der Grundlinie (16) der Breite der Überlappungsfläche (18) entspricht.

7. Abdeckscheibe nach Anspruch 6, dadurch gekennzeichnet, daß die Stärke der Teile (10, 12) im Bereich der Überlappungfläche (18) und im Bereich zwischen der Kröpfungslinie (28) und der Durchmesserlinie bzw. der Grundlinie (16) etwa die Hälfte der Stärke der Teile (10, 12) jenseits der Kröpfungslinie (28) beträgt.

8. Abdeckscheibe nach einem der vorangehenden Ansprüche, dadurch gekennzeichnet, daß die Teile (10, 12) aus organischen Faserstoffen besteht.

9. Abdeckscheibe nach einem der Ansprüche 1 bis 7, dadurch gekennzeichnet, daß die Teile (10, 12) aus einem Kunststoff oder Kunststauffschaum auf der Basis von Formaldehydharnstoff oder Polystyrol bestehen.

10. Abdeckscheibe nach einem der vorangehenden Ansprüche, dadurch gekennzeichnet, daß die Oberflächen lackiert sind.

11. Abdeckscheibe nach einem der vorangehenden Ansprüche, dadurch gekennzeichnet, daß die Teile (10, 12) mit Repellents oder insektizid oder molluskizid wirkenden Stoffen getränkt sind.

12. Abdeckscheibe nach einem der vorangehenden Ansprüche, dadurch gekennzeichnet, daß die Teile (10, 12) mit einem klebrigen Stoff beschichtet sind.

13. Abdeckscheibe nach einem der vorangehenden Ansprüche, dadurch gekennzeichnet, daß die Teile (10, 12) mit feinen, einen Feuchtigkeitsdurchtritt erlaubenden Löchern versehen sind.

## Claims

1. Covering disc serving as a plant aid made of a decomposable material, with two identical parts (10, 12) which have to be put together overlapping partly so as to form the covering disc, each consisting of a main area (14) in the shape of a semicircle or a half part polygon and an overlapping area (18) adjoining the imaginary line of diameter or baseline (16) of main area (14), which has a first recess (20) extending centrically diagonally to line of diameter or baseline (16) and projecting into main area (14),
characterised in that
both parts (10, 12) have a second recess (22) extending eccentrically diagonally to line of diameter or baseline (16), protuding in a semicircle into main area 14.

2. Covering disc as claimed in Claim 1, characterised in that overlapping area (18) has a slot (24) extending diagonally to line of diameter or baseline (16) of main area (14).

3. Covering disc as claimed in either of Claims 1 or 2, characterised in that the radius of the semicircular section of the eccentric second recess (22) is more than twice the radius of the semicircular section of the centrical first recess (20).

4. Covering disc as claimed in either of Claims 1 or 2, characterised in that the distance between slot (24) and the imaginary centre line (26) of parts (10, 12) corresponds to the mean distance between the second recess (22) and this same centre line.

5. Covering disc as claimed in any one of the preceeding claims, characterised in that first recess (20) widens conically.

6. Covering disc as claimed in any one of the preceeding claims, characterised in that main area (14) is offset diagonally to its line of diameter or baseline (16), wherein the distance between the offset line (28) and the line of diameter or baseline (16) is equal to the width of overlapping area (18).

7. Covering disc as claimed in Claim 6, characterised in that the width of parts (10, 12) in the area between offset line (28) and line of diameter or baseline (16) is reduced to about half the width of parts (10, 12) on the other side of offset line (28).

8. Covering disc as claimed in any one of the preceeding claims, characterised in that parts (10, 12) are made of organic fibrous material.

9. Covering disc as claimed in either of Claims 1 to 7, characterised in that parts (10, 12) are made of plastic or plastic foam on the basis of formaldehyde carbamide or polystyrene.

10. Covering disc as claimed in any one of the preceeding claims, characterised in that the surfaces are varnished.

11. Covering disc as claimed in any one of the preceeding claims, characterised in that parts (10, 12) are impregnated with a repellent, an insecticide or muluskicide.

12. Covering disc as claimed in any one of the preceeding claims, characterised in that parts (10, 12) are coated with a sticky substance.

13. Covering disc as claimed in any one of the preceeding claims, characterised in that parts (10, 12) are provided with fine pores allowing humidity to pass.

## Revendications

1. Disque de recouvrement, servant de protecteur pour plante, en un matériau putrescible, avec deux parties (10, 12) identiques, à superposer en les faisant se chevaucher partiellement, pour former le disque de recouvrement, composées chacune d'une surface principale (14), se présentant sous la forme d'un demi-cercle ou d'un demi-polygone, et d'une surface de chevauchement (18), se raccordant à la ligne diamétrale ou ligne de base (16) virtuelle de la surface principale (14), pourvues d'un premier évidement (20), ménagé dans la surface principale (14) et s'étendant au centre, transversalement par rapport à la ligne diamétrale ou ligne de base (16) virtuelle,
caractérisé en ce que les deux parties (10, 12) sont pourvues d'un deuxième évidement (22), ménagé sous forme de demi-cercle dans la surface principale (14) et s'étendant de façon excentrée, transversalement par rapport à la ligne diamétrale ou ligne de base (16).

2. Disque de recouvrement selon la revendication 1, caractérisé en ce que la surface de chevauchement (18) est pourvue d'une fente (24), s'étendant transversalement par rapport à la ligne diamétrale ou ligne de base (16) de la surface principale (14).

3. Disque de recouvrement selon la revendication 1 ou 2, caractérisé en ce que le rayon du tronçon en forme de demi-cercle du deuxième évidement (22) disposé de façon excentrée fait plus du double du rayon du tronçon en forme de demi-cercle de l'évidement (20) disposé de façon centrée.

4. Disque de recouvrement selon la revendication 2 ou 3, caractérisé en ce que la distance entre la fente (24) et l'axe virtuel (26) des parties (10, 12) correspond à la distance moyenne entre le deuxième évidement (22) et cet axe.

5. Disque de recouvrement selon l'une des revendications précédentes, caractérisé en ce que le premier évidement (20) va en s'agrandissant de façon conique, en allant vers l'extérieur.

6. Disque de recouvrement selon l'une des revendications précédentes, caractérisé en ce que la surface principale (14) est coudée transversalement par rapport à sa ligne diamétrale ou ligne de base (16), la distance entre la ligne de pliage (28) et la ligne diamétrale ou ligne de base (16) correspondant à la largeur de la surface de chevauchement (18).

7. Disque de recouvrement selon la revendication 6, caractérisé en ce que l'épaisseur des parties (10, 12) dans la zone de la surface de chevauchement (18) et dans la zone située entre la ligne de pliage (28) et la ligne diamétrale ou ligne de base (16) est d'à peu près la moitié de l'épaisseur des parties (10, 12) de l'autre côté de la ligne de pliage (28.

8. Disque de recouvrement selon l'une des revendications précédentes, caractérisé en ce que les parties (10, 12) sont en matériau fibreux organique.

9. Disque de recouvrement selon l'une des revendications 1 à 7, caractérisé en ce que les parties (10, 12) sont en une matière synthétique ou une mousse synthétique, à base d'urée-formaldéhyde ou de polystyrène.

10. Disque de recouvrement selon l'une des revendications précédentes, caractérisé en ce que les surfaces sont peintes.

11. Disque de recouvrement selon l'une des revendications précédentes, caractérisé en ce que les parties (10, 12) sont imbibées de substances à action repoussante ou insecticide ou mollusquicide.

12. Disque de recouvrement selon l'une des revendications précédentes, caractérisé en ce que les parties (10, 12) sont recouvertes d'une substance adhésive.

13. Disque de recouvrement selon l'une des revendications précédentes, caractérisé en ce que les parties (10, 12) sont pourvues de trous fins, permettant un passage de l'humidité.
